# FASCICULE DE BREVET EUROPEEN

(11) **EP 2 393 713 B1**
(45) Date de publication et mention de la délivrance du brevet: **25.02.2015**
(21) Numéro de dépôt: 10708255.4
(22) Date de dépôt: 01.02.2010
(51) Int. Cl.: B64D 29/06, B64D 33/02, F02C 7/04

(54) **NACELLE DE TURBORÉACTEUR**
TRIEBWERKSVERKLEIDUNG
ENGINE NACELLE

(30) Priorité: 04.02.2009 FR 0950685
(43) Date de publication de la demande: 14.12.2011
(73) Titulaire: Aircelle, 76700 Gonfreville l'Orcher (FR)
(72) Inventeur: VAUCHEL, Guy Bernard, F-76700 Harfleur (FR); BEILLIARD, Stéphane, F-31300 Toulouse (FR)
(74) Mandataire: Chevalier, Renaud Philippe
(86) Numéro de dépôt international: PCT/FR2010/050154
(87) Numéro de publication internationale: WO 2010/089498

(56) Documents cités:
- BE-A- 425 257
- DE-A1- 2 642 523
- FR-A- 2 757 823
- FR-A- 2 906 568
- GB-A- 2 274 490

## Description

L'invention concerne une nacelle de turboréacteur. D'une façon générale, une nacelle de turboréacteur comprend une structure d'entrée d'air, une section médiane et une section aval. On entend ici par le terme « aval » la direction correspondant au sens du flux d'air froid pénétrant dans le turboréacteur. Le terme « amont » désigne la direction opposée.

Le structure d'entrée d'air est située en amont du turboréacteur servant à propulser l'aéronef et comporte un capot mobile dit laminaire et fréquemment désigné par « LFC » (« Laminar Forward Cowl », signifiant « Capot Avant Laminaire »). En aval de la structure d'entrée d'air, la structure médiane est destinée à entourer une soufflante du turboréacteur. Plus en aval encore se situe la section aval abritant en général des moyens d'inversion de poussée destinés à entourer la chambre de combustion du turboréacteur. La nacelle se termine par une tuyère d'éjection dont la sortie est située en aval du turboréacteur.

La structure d'entrée d'air comprend, d'une part, une lèvre d'entrée d'air et d'autre part, une structure aval sur laquelle est rapportée la lèvre. La lèvre d'entrée d'air est adaptée pour permettre la captation optimale vers le turboréacteur de l'air nécessaire à l'alimentation de la soufflante et des compresseurs internes du turboréacteur. La structure aval, quant à elle, est destinée à canaliser convenablement l'air vers les aubes de la soufflante. Cette structure aval comporte généralement un panneau ou capot externe et un panneau interne. Le panneau interne comporte une virole acoustique permettant d'atténuer les bruits engendrés par le turboréacteur ainsi que les vibrations des structures.

Une majorité équipements tels que la boîte de commande d'accessoire (AGB ou « Accessory Gear Box ») peuvent être montés sur un corps de turboréacteur, situé en aval d'un carter appartenant à la structure médiane et destiné à entourer la soufflante du turboréacteur. Une minorité d'équipements est montée autour du carter de soufflante précité, de tels équipements pouvant être par exemple des boîtiers électroniques ou un réservoir d'huile. Ces derniers sont disposés au niveau de l'extrémité aval du carter de la soufflante, plus précisément sur un carter intermédiaire dimensionné pour supporter de tels équipements.

Une opération de maintenance fréquente consiste à remplir le réservoir d'huile précité.

A cet effet, il est connu de prévoir un hublot de visualisation et une trappe d'accès au réservoir d'huile. La mise en place d'une telle trappe diminue la résistance de la structure de la nacelle et augmente le coût de celle-ci.

Par ailleurs, pour remplacer une partie des équipements internes, il est en général nécessaire de déposer la totalité de la structure d'entrée d'air. Cette opération dite de dépose consiste à extraire la structure d'entrée d'air du reste de la nacelle. Pour cela, il est impératif que la nacelle soit équipée d'un système permettant la mobilité de la structure d'entrée d'air. Une telle dépose requiert un outillage lourd et important, et entraîne une immobilisation de l'ensemble propulsif et donc généralement de l'avion.

L'état de l'art est illustré par le document FR 2 757 823.

Le document FR 08/00845 au nom de la Demanderesse décrit également un système permettant une telle mobilité.

Plus particulièrement, ce document décrit une nacelle de turboréacteur comprenant une structure externe comportant une lèvre annulaire délimitant une entrée d'air ainsi qu'un capot s'étendant dans le prolongement de la lèvre annulaire, une structure interne fixe s'étendant dans le prolongement de l'entrée d'air et présentant une zone équipée d'au moins équipement dont la maintenance ou la surveillance est à assurer, la structure externe étant mobile par rapport à la structure interne entre une position de fonctionnement dans laquelle le capot recouvre la zone munie de l'équipement, et une position de maintenance dans laquelle le capot découvre ladite zone de façon à permettre l'accès depuis l'extérieur à l'équipement, la structure externe étant équipée d'au moins un longeron de renforcement conçu pour transmettre des efforts entre la lèvre annulaire et le capot, le longeron s'étendant, selon le plan radial de l'entrée d'air, depuis la structure externe vers la structure interne, le longeron comportant des moyens de guidage aptes à coopérer avec des moyens de guidage complémentaires de la structure interne.

Les moyens de guidage complémentaires sont formés par des rails coopérant avec des organes de guidage montés sur les longerons. Chaque rail est monté sous le longeron et s'étendant suivant l'axe longitudinal de la nacelle. Des ouvertures ou des évidements permettant le passage des rails sont ménagés dans les longerons, au niveau des points de croisement entre chaque rail et le longeron correspondant.

De tels évidements ou ouvertures affaiblissent la résistance des longerons, également appelée inertie.

On rappelle que chaque longeron s'étend suivant la direction longitudinale de la nacelle mais également suivant une direction radiale, c'est-à-dire en direction du centre de la nacelle, idéalement au plus près du carter de soufflante. Or, les rails, les organes de guidage et les ferrures permettant de fixer ces composants sont logés entre les longerons et le carter de soufflante, ce qui limite les dimensions des longerons suivant le plan radial correspondant.

Ainsi, la rigidité des longerons est également limitée, celle-ci dépendant directement de la dimension des longerons suivant le plan radial précité.

L'invention vise à remédier, en tout ou partie, à ces inconvénients, en proposant une nacelle capable de résister à des contraintes mécaniques élevées, tout en assurant de manière simple et peu coûteuse la fonction précitée de mobilité de la structure d'entrée d'air et tout en permettant l'accès aux équipements disposés sur la structure interne à des fins de maintenance.

A cet effet, l'invention concerne une nacelle de turboréacteur selon la revendication 1.

Le décalage des moyens de moyens de guidage et des moyens de guidage complémentaires hors du plan radial permet de pouvoir étendre les dimensions du longeron au maximum, c'est-à-dire de façon à ce que l'extrémité interne du longeron, tournée vers le centre de la nacelle, soit située au voisinage de la structure interne. L'augmentation des dimensions du longeron suivant le plan radial augmente alors la résistance de ces derniers.

En outre, il n'est alors plus nécessaire de prévoir des ouvertures ou des évidements dans les longerons puisque toute interférence entre les moyens de guidage ou les moyens de guidage complémentaires et le longeron correspondant est évitée. Ceci a également pour effet d'augmenter la résistance du longeron.

Selon une caractéristique de l'invention, la structure interne comporte une virole, un carter destiné à entourer une soufflante de turboréacteur et disposé en aval de la virole, ainsi qu'un carter intermédiaire monté en aval du carter de soufflante, le carter intermédiaire étant muni de l'équipement, par exemple un réservoir d'huile.

Le carter intermédiaire peut alors être dimensionné indépendamment du reste de la structure interne, par exemple indépendamment du carter de soufflante ou de la virole, afin qu'il remplisse correctement sa fonction de support de l'équipement.

Avantageusement, les moyens de guidage et les moyens de guidage complémentaires comportent respectivement au moins un rail et au moins un galet.

Il est à noter que le rail, outre sa fonction de guidage, assure également une fonction de renforcement. La mise en place du rail sur le longeron forme donc un ensemble cohérent destiné au renforcement.

Selon une possibilité de l'invention, les moyens de guidage complémentaires comportent au moins un galet en forme générale de diabolo, définissant une surface de contact en creux et en forme générale de V, les moyens de guidage comportant au moins un rail inséré, au moins en partie, dans le creux formé par la surface de contact.

Il est à noter que la forme du rail peut être intégrée dans le longeron.

Le montage entre le rail et le galet peut être prévu avec ou sans jeu. Le montage avec jeu facilite la mise en place de la structure mobile, après dépose de celle-ci par exemple, puisque les tolérances de positionnement entre la structure fixe et la structure mobile lors du montage sont alors plus importantes.

La structure en oméga offre une résistance accrue pour un poids et un encombrement faible.

Avantageusement, au moins un longeron présente une structure en caisson.

La structure en caisson permet de limiter le poids du longeron tout en offrant une résistance importante de celui-ci.

Selon une possibilité de l'invention, la nacelle comporte au moins un premier et d'un second moyens de guidage ou moyens de guidage complémentaires, écartés l'un de l'autre selon l'axe longitudinal de l'entrée d'air.

L'écartement peut être ainsi défini de manière à ce qu'un basculement de la structure externe mobile sous l'effet de son poids est évité lors du passage de la position de fonctionnement à la position de maintenance.

Préférentiellement, la structure externe comporte une butée destinée à venir coopérer avec une butée complémentaire de la structure interne en position de maintenance, de manière à limiter le mouvement de la structure externe vis-à-vis de la structure interne.

La course de la structure externe mobile peut ainsi être limitée de façon à ce que celle-ci puisse uniquement passer de sa position de fonctionnement à sa position de maintenance. On évite ainsi tout risque de basculement. La butée peut toutefois être démontable afin de pouvoir réaliser l'opération de dépose.

La butée peut être formée soit par une ferrure prévue à cet effet, soit directement par une partie des moyens de guidage complémentaire.

Selon une forme de réalisation de l'invention, la butée est équipée d'un crochet, destiné à venir en prise avec un organe de retenue monté sur la structure interne, en position de maintenance de la structure externe, de manière à éviter le basculement de la structure externe.

Le crochet permet ainsi encore d'éviter tout phénomène de basculement en position de maintenance de la structure externe mobile.

L'organe de retenue peut être formé à nouveau par un organe indépendant fixé sur la structure interne ou par une partie des moyens de guidage complémentaire.

L'invention sera davantage comprise à la lecture de la description non limitative qui va suivre, faite en référence aux figures ci-annexées.
Figure 1 est une vue schématique, en coupe longitudinal, de la nacelle selon l'invention ;
Figure 2 en est une vue en coupe transversale, selon une première forme de réalisation de l'invention ;
Figure 3 est une vue correspondant à la figure 2, d'une seconde forme de réalisation de l'invention ;
Figure 4 est une vue agrandie représentant les moyens de guidage d'un longeron et les moyens de guidage complémentaires correspondants de la structure interne ;
Figure 5 est une vue correspondant à la figure 4, d'une variante de réalisation de l'invention ;
Figure 6 est une vue partielle, en coupe longitudinale, de la nacelle, en position de fonctionnement ;
Figure 7 est une vue correspondant à la figure 6, en position de maintenance de la nacelle ;
Figure 8 est une vue correspondant à la figure 9, d'une variante de réalisation ;
Figure 9 est une vue correspondant à la figure dans laquelle les moyens de guidage et les moyens de guidage complémentaire ne sont pas représentés.

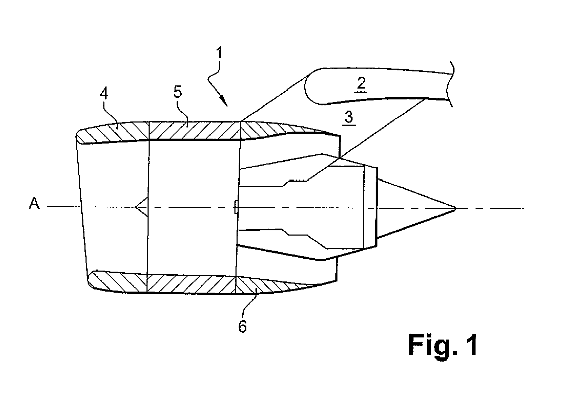

Une nacelle 1 selon l'invention telle que représentée sur la figure 1 constitue un logement tubulaire pour un turboréacteur (non visible) dont elle sert à canaliser les flux d'air qu'il génère en définissant des lignes aérodynamiques internes et externes nécessaires à l'obtention de performances optimales. Elle abrite également différents composants nécessaires au fonctionnement du turboréacteur ainsi que des systèmes annexes tels qu'un inverseur de poussée.

La nacelle 1 est destinée à être rattachée à une structure fixe d'un avion, telle qu'une aile 2, par l'intermédiaire d'un pylône 3.

Plus précisément, la nacelle 1 possède une structure comprenant une structure d'entrée d'air 4 en amont, une structure médiane 5 entourant une soufflante (non visible) du turboréacteur, et une section aval 6 entourant le turboréacteur et abritant généralement un système d'inversion de poussée (non représenté).

La structure d'entrée d'air 4 se divise en deux zones. La première zone est une lèvre d'entrée annulaire 7, adaptée pour permettre la captation optimale vers le turboréacteur de l'air nécessaire à l'alimentation de la soufflante et des compresseurs internes du turboréacteur. La lèvre 7 présente un bord interne aval 8 formant un rebord.

La seconde zone est une section située plus en aval que la lèvre d'entrée comprenant au moins un panneau ou capot externe 9. Selon l'invention, la lèvre 7 est intégrée au capot externe 9 de manière à former une pièce unique démontable.

Le capot externe 9 et la lèvre 7 forment, au moins en partie, la structure externe. Cette dernière est équipée de longerons 10 conçus pour transmettre des efforts entre la lèvre annulaire 7 et le capot externe 9. Celui-ci comporte une première partie 11 s'étendant sous le capot externe et une seconde partie 12, formant un crochet tourné vers l'intérieur de la nacelle, dont l'extrémité 13 vient en appui contre le rebord 8 formé par bord interne aval 8 de la lèvre 7.

Le longeron 10 s'étend ainsi d'une part selon l'axe A de la nacelle et d'autre part, dans le plan radial P correspondant.

Chaque longeron 10 présente une structure en caisson ou en forme d'oméga, définissant une première et une seconde branches latérales 14, 15 fixées chacune, au niveau d'une extrémité externe, au capot externe 9 et reliées l'une à l'autre, au niveau d'une extrémité interne, par une paroi d'extrémité 16.

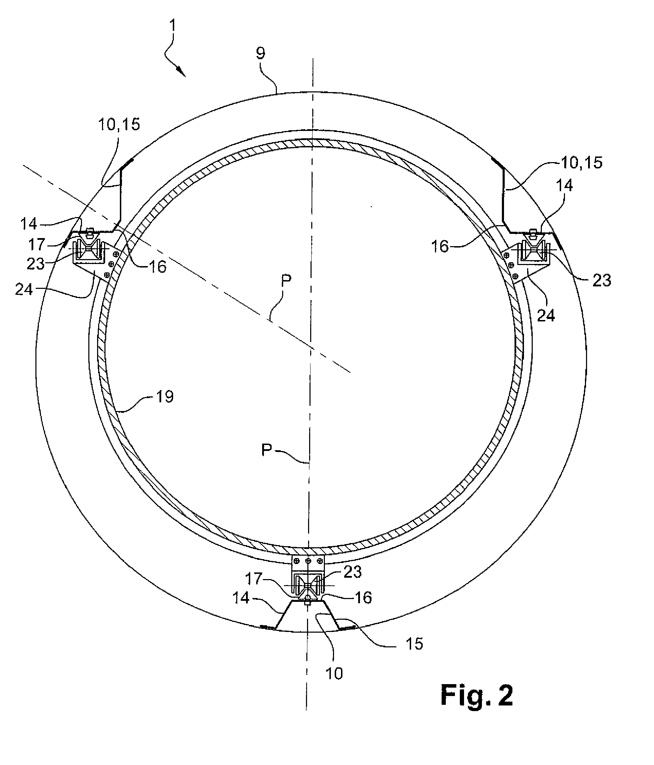

Dans la forme de réalisation représentée à la figure 2, la nacelle est équipée de trois longerons 10, à savoir deux longerons disposés en partie haute de la nacelle 1 et un longeron disposé en partie basse, à 6 heures.

Chaque longeron 10 est équipé d'un rail de guidage 17 se présentant sous la forme d'un profilé creux rectiligne, de section générale triangulaire ou trapézoïdale. Sur chacun des longerons 10 supérieurs, le rail est monté au niveau de la face latérale 14 tournée vers le bas. Le rail 17 équipant le longeron 10 inférieur est monté sur la paroi d'extrémité 16 et s'étendant ainsi dans le plan radial P passant par le longeron correspondant.

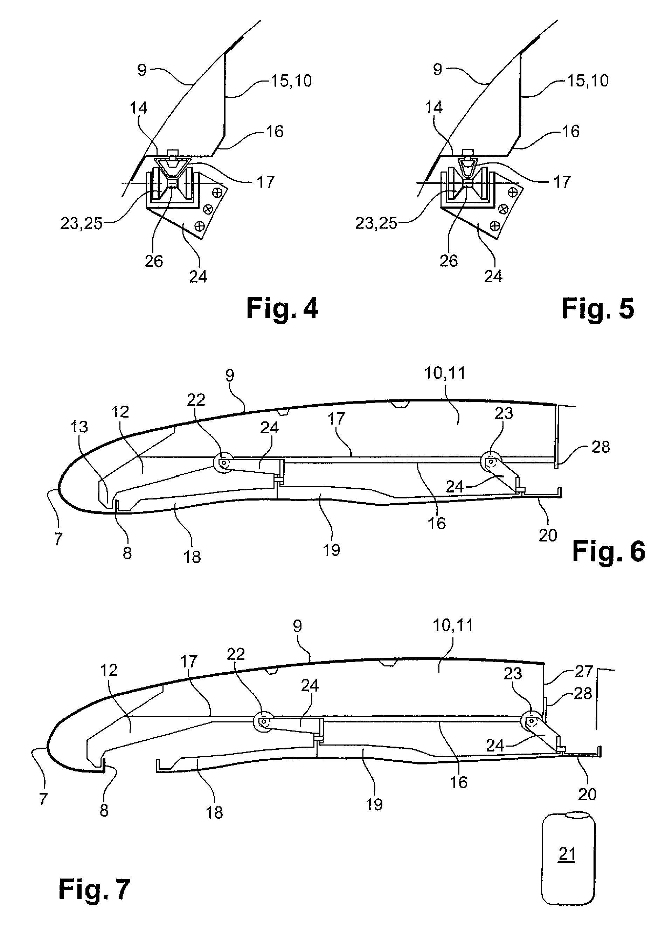

Dans les vues schématiques des figures 6 à 8, seule la ligne de contact entre le rail et les galets est représentée et désigné par la référence 17.

Au moins un panneau interne 18 prolonge le bord interne 8 de la lèvre d'entrée d'air 7. Le panneau interne 18 est destiné à canaliser convenablement l'air vers les aubes (non représentées) de la soufflante. Par ailleurs, le panneau interne 18 comprend une virole acoustique destinée à atténuer les nuisances sonores dues au fonctionnement du turboréacteur et aux vibrations de la structure. La virole acoustique peut être constituée d'une structure en nid d'abeille ou de toute autre structure permettant d'atténuer les nuisances sonores.

En outre, la structure médiane 5 comporte un carter, dit carter de soufflante 19 et est rattachée à la structure d'entrée d'air 4 de manière à assurer une continuité aérodynamique. Plus particulièrement, le panneau interne 18 est fixé à son extrémité aval à une extrémité amont du carter de soufflante 19, par l'intermédiaire de brides de fixation.

De plus, un carter intermédiaire 20 est fixé en aval du carter de soufflante à l'aide d'une bride, un réservoir d'huile 21 étant monté sur celui-ci.

Ainsi, le panneau interne 18, le carter de soufflante 19 et le carter intermédiaire 20 forment une structure interne fixe.

Le carter de soufflante 19 est en outre équipé d'une pluralité de galets 22, 23 disposés en regard des rails 17.

Dans la forme d'exécution illustrée aux figures 6 à 8, deux galets 22, 23 coopèrent avec chacun des rails 17 des longerons 10 supérieurs.

Un premier galet 22, appelé ci-après galet amont, est fixé à la bride de fixation entre le panneau interne 18 et le carter de soufflante 19, par l'intermédiaire d'une ferrure 24.

Un deuxième galet 23, appelé ci-après galet aval et similaire au galet amont, est monté au niveau de la bride de liaison entre le carter de soufflante 19 et le carter intermédiaire 20.

Chaque galet 22, 23 présente une forme en diabolo, présentant deux surfaces annulaires tronconiques 25 reliées par une zone cylindrique 26, de manière à former un creux en forme générale de V (figure 4).

Selon une variante représentée à la figure 4, le rail 17 et les galets 22, 23 sont dimensionnés de telle manière que ce que le rail 17 soit monté sans jeu dans le creux en V des galets 22, 23, c'est-à-dire que celui-ci soit en appui contre chacune des surfaces annulaires tronconiques 25.

Selon une autre variante représentée à la figure 5, le rail 17 et les galets 22, 23 sont dimensionnés de telle manière que ce que le rail 17 soit monté avec jeu dans le creux en V des galets 22, 23, c'est-à-dire que celui-ci ne soit pas en appui contre chacune des surfaces annulaires tronconiques 25, mais contre la zone cylindrique 26.

Il est à noter que le contact réalisé dans l'exemple par un galet peut être reproduit par un simple patin.

Comme cela est illustré à la figure 2, chaque longeron 10 est équipé d'un rail 17 et de galets 22, 23 de structures identiques ou similaires à celle présentée ci-dessus. La principale différence réside dans le fait que, comme vu précédemment, dans le cas des longerons 10 supérieurs, les moyens de guidage formés par les galets 22, 23 et le rail 17 sont décalés du plan radial P du longeron 10 de façon à ce que celui-ci puisse d'étendre au plus près de la structure interne, c'est-à-dire du panneau interne 18 ou du carter de soufflante 19. En outre, il n'est alors pas nécessaire de prévoir des ouvertures ou des évidements dans les longerons, comme cela est le cas dans l'art antérieur. De cette manière, les dimensions et donc l'inertie ou la rigidité du longeron sont augmentés.

Il est à noter que les galets amont et aval d'un même longeron peuvent ne pas être alignés dans un plan longitudinal c'est-à-dire qu'il peuvent être décalés l'un de l'autre par rapport à un plan vertical mais aussi décalés l'un de l'autre par rapport à un plan horizontal.

De même le chemin de roulement peut ne pas être parallèle par rapport à l'axe de la nacelle.

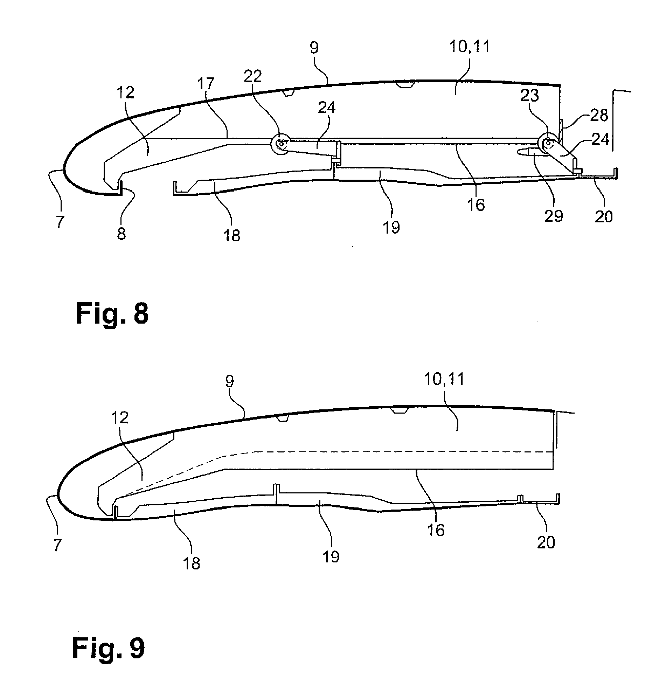

La figure 9 représente schématiquement en pointillé la paroi d'extrémité 16 d'un longeron 10 dans le cas où les moyens de guidage étaient disposés dans le plan radial P.

Au contraire, dans le cas du longeron 10 inférieur, le rail 17 et les galets 22, 23 sont disposés dans le plan médian P correspondant, de sorte que la dimension du longeron 10 dans ce plan est réduite.

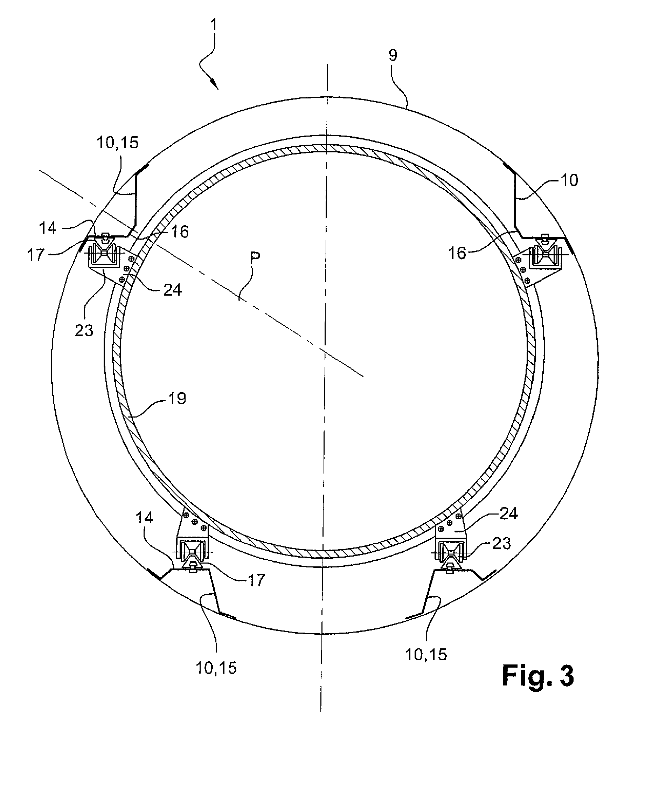

Bien entendu, un décalage similaire à celui des longerons supérieurs pourrait être prévu. Ceci est par exemple envisagé dans la forme de réalisation de la figure 3, dans laquelle la zone inférieure de la nacelle 1 comporte deux longerons 10, un rail 17 étant monté sur chacune des faces latérales 14 tournées vers le haut des longerons inférieurs. De cette manière, chaque système de guidage formé par les galets 22, 23 et le rail 17 correspondant est décalé du plan radial P du longeron 10.

Les rails 17 et les galets 22, 23 permettent le déplacement et le guidage de la structure externe vis-à-vis de la structure interne, entre une position de fonctionnement, représentée à la figure 6 et une position de maintenance, représentée à la figure 7. Dans cette dernière position, le capot externe 9 découvre le carter intermédiaire 20, de sorte qu'il est possible d'accéder au réservoir d'huile 21 depuis l'extérieur. L'opération de maintenance courante visant à remplir le réservoir d'huile 21 peut donc être effectuée par simple déplacement de la structure externe en position de maintenance.

La structure des rails 17 et des galets 22, 23 permet également d'éviter une rotation de la structure externe autour de son axe longitudinal A. En outre, la position des galets amont et aval 22, 23 est déterminée de façon à éviter tout basculement de la structure externe en position de maintenance. Un tel basculement est par exemple évité en plaçant le galet amont 22 en amont du centre de la gravité de la structure externe 7, 9, 10.

Le capot externe 9 comporte une face d'extrémité aval 27 (figure 7) équipée d'au moins une butée 28 faisant saillie vers l'intérieur.

Comme cela est visible à la figure 7, chaque butée 28 vient en appui contre un galet aval 23 ou contre une ferrure liée à un galet aval, dans la position de maintenance.

Selon une possibilité de l'invention représentée à la figure 8, chaque butée 28 forme également un crochet 29 dits « anti-dévers », chaque crochet 29 étant destiné à venir saisir le galet aval 23 correspondant ou un organe de retenue lié à celui-ci en position de maintenance. Cette forme de réalisation vise à empêcher tout basculement de la structure externe mobile en position de maintenance, et est particulièrement adapté au cas où il n'est pas possible de disposer le galet amont 22 en amont du centre de gravité.

Lorsque il est nécessaire de réaliser l'opération de dépose de la structure externe mobile 7, 9, 10, les butées ou les crochets 28, 29 sont retirés de manière à autoriser le déplacement et le guidage de la structure externe au-delà de sa position de maintenance, jusqu'au retrait complet de celle-ci.

La remise en place ou la pose de la structure externe sur la structure fixe est facilitée puisqu'il n'est pas nécessaire d'assurer un repositionnement précis de celle-ci par rapport à la structure fixe. En effet, la forme des galets 22, 23 et des rails 17 autorise un léger désaxage ou désalignement lors de cette opération, les parois tronconiques 25 des galets 22, 23 et la forme des rails 17 ayant tendance à repositionner automatiquement et correctement la structure externe sous l'effet de son propre poids après engagement des rails 17 dans les galets 22, 23.

Ce phénomène est encore plus accentué si certains au moins des rails 17 sont montés avec jeu sur les galets 22, 23 correspondants, comme illustré à la figure 5.

Comme il va de soi l'invention ne se limite pas aux seules formes de réalisation de cette nacelle de turboréacteur, décrites ci-dessus à titre d'exemples, mais elle embrasse au contraire toutes les variantes qui s'inscrivent dans la protection conférée par les revendications.

## Revendications

1. Nacelle (1) de turboréacteur comprenant :
- une structure externe comportant une lèvre annulaire (7) délimitant une entrée d'air ainsi qu'un capot (9) s'étendant dans le prolongement de la lèvre annulaire (7),
- une structure interne fixe (18, 19, 20) s'étendant dans le prolongement de l'entrée d'air et présentant une zone (20) équipée d'au moins équipement (21) dont la maintenance ou la surveillance est à assurer,
la structure externe étant mobile par rapport à la structure interne entre une position de fonctionnement dans laquelle le capot (9) recouvre la zone (20) munie de l'équipement (21), et une position de maintenance dans laquelle le capot (9) découvre ladite zone (20) de façon à permettre l'accès depuis l'extérieur à l'équipement (21),
**caractérisée en ce que** la structure externe est équipée d'au moins un longeron de renforcement (10) conçu pour transmettre des efforts entre la lèvre annulaire (7) et le capot (9), le longeron (10) s'étendant, selon le plan radial de l'entrée d'air, depuis la structure externe vers la structure interne,
le longeron (10) présente une section sensiblement en oméga, formant une première et une seconde parois latérales (14, 15) rattachées à la structure externe (9) et une extrémité (16) tournée vers la structure interne (18, 19),
le longeron (10) comporte des moyens de guidage (17) aptes à coopérer avec des moyens de guidage complémentaires (22, 23) de la structure interne,
les moyens de guidage (17) du longeron (10) sont montés sur l'une des première et seconde parois latérales (14, 15) du longeron (10), et **en ce que** les moyens de guidage (17) du longeron (10) et les moyens de guidage complémentaires (22, 23) de la structure interne sont décalés par rapport au plan radial (P) d'extension du longeron (10).

2. Nacelle (1) selon la revendication 1, **caractérisée en ce que** la structure interne comporte une virole (18), un carter (19) destiné à entourer une soufflante de turboréacteur et disposé en aval de la virole (18), ainsi qu'un carter intermédiaire (20) monté en aval du carter (19), le carter intermédiaire (20) étant muni de l'équipement, par exemple un réservoir d'huile (21).

3. Nacelle (1) selon l'une des revendications 1 ou 2, **caractérisée en ce que** les moyens de guidage et les moyens de guidage complémentaires comportent respectivement au moins un rail (17) et au moins un galet (22, 23).

4. Nacelle (1) selon la revendication 3, **caractérisée en ce que** les moyens de guidage complémentaires comportent au moins un galet (22, 23) en forme générale de diabolo, définissant une surface de contact en creux (25, 26) et en forme générale de V, les moyens de guidage comportant au moins un rail (17) inséré, au moins en partie, dans le creux formé par la surface de contact (25, 26).

5. Nacelle (1) selon l'une des revendications 1 à 4, **caractérisée en ce qu'**au moins un longeron (10) présente une structure en caisson.

6. Nacelle (1) selon l'une des revendications 1 à 5, **caractérisée en ce qu'**elle comporte au moins un premier et d'un second moyens de guidage ou moyens de guidage complémentaires (22, 23), écartés l'un de l'autre selon l'axe longitudinal (A) de l'entrée d'air.

7. Nacelle (1) selon l'une des revendications 1 à 6, **caractérisée en ce que** la structure externe comporte une butée (28) destinée à venir coopérer avec une butée complémentaire (23, 24) de la structure interne (19) en position de maintenance, de manière à limiter le mouvement de la structure externe vis-à-vis de la structure interne.

8. Nacelle (1) selon la revendication 7, **caractérisée en ce que** la butée (28) est équipée d'un crochet (29), destiné à venir en prise avec un organe de retenue (23, 24) monté sur la structure interne (19), en position de maintenance de la structure externe, de manière à éviter le basculement de la structure externe.

## Patentansprüche

1. Turbostrahl-Triebwerksgondel (1), umfassend:
- eine äußere Struktur, die eine ringförmige Lippe (7) umfasst, die einen Lufteingang begrenzt, sowie eine Haube (9), die sich in der Verlängerung der ringförmigen Lippe (7) erstreckt,
- eine feste innere Struktur (18, 19, 20), die sich in der Verlängerung des Lufteingangs erstreckt und einen Bereich (20) aufweist, der mit mindestens einer Ausrüstung (21) ausgestattet ist, deren Wartung oder Überwachung sicherzustellen ist,
wobei die äußere Struktur mit Bezug auf die innere Struktur zwischen einer Betriebsposition, in der die Haube (9) den Bereich (20) abdeckt, der mit der Ausrüstung (21) ausgestattet ist, und einer Wartungsposition beweglich ist, in der die Haube (9) den Bereich (20) freisetzt, um den Zugang von außen zur Ausrüstung (21) zu ermöglichen,
**dadurch gekennzeichnet, dass** die äußere Struktur mit mindestens einem Verstärkungs-Längsträger (10) ausgestattet ist, der entworfen ist, um Kräfte zwischen der ringförmigen Lippe (7) und der Haube (9) zu übertragen, wobei sich der Längsträger (10) gemäß der radialen Ebene des Lufteingangs von der äußeren Struktur hin zur inneren Struktur erstreckt,
der Längsträger (10) einen im Wesentlichen Omega-förmigen Schnitt aufweist, der eine erste und eine zweite Seitenwand (14, 15) bildet, die mit der äußeren Struktur (9) verbunden sind, und ein Ende (16), das auf die innere Struktur (18, 19) gerichtet ist,
der Längsträger (10) Führungsmittel (17) umfasst, die ausgelegt sind, um mit komplementären Führungsmitteln (22, 23) der inneren Struktur zusammenzuarbeiten,
die Führungsmittel (17) des Längsträgers (10) auf einer der ersten und der zweiten Seitenwand (14, 15) des Längsträgers (10) montiert sind, und dadurch, dass die Führungsmittel (17) des Längsträgers (10) und die komplementären Führungsmittel (22, 23) der inneren Struktur mit Bezug auf die radiale Ebene (P) der Erstreckung des Längsträgers (10) versetzt sind.

2. Gondel (1) nach Anspruch 1, **dadurch gekennzeichnet, dass** die innere Struktur einen Ring (18) umfasst, ein Gehäuse (19), das ausgelegt ist, um ein Gebläse des Turbostrahltriebwerks zu umgeben und nachgeordnet vom Ring (18) angebracht ist, sowie ein Zwischengehäuse (20), das nachgeordnet vom Gehäuse (19) montiert ist, wobei das Zwischengehäuse (20) mit der Ausrüstung ausgestattet ist, z.B. einem Ölbehälter (21).

3. Gondel (1) nach einem der Ansprüche 1 oder 2, **dadurch gekennzeichnet, dass** die Führungsmittel und die komplementären Führungsmittel jeweils mindestens eine Schiene (17) und mindestens eine Rolle (22, 23) umfassen.

4. Gondel (1) nach Anspruch 3, **dadurch gekennzeichnet, dass** die komplementären Führungsmittel mindestens eine Rolle (22, 23) mit der allgemeinen Form eines Diabolos umfassen, das eine hohle Kontaktfläche (25, 26) definiert und die allgemeine Form eines V aufweist, wobei die Führungsmittel mindestens eine Schiene (17) umfassen, die mindestens teilweise in den Hohlraum eingeführt ist, der durch die Kontaktfläche (25, 26) gebildet ist.

5. Gondel (1) nach einem der Ansprüche 1 bis 4, **dadurch gekennzeichnet, dass** mindestens ein Längsträger (10) eine Kassettenstruktur aufweist.

6. Gondel (1) nach einem der Ansprüche 1 bis 5, **dadurch gekennzeichnet, dass** sie mindestens ein erstes und ein zweitens Führungsmittel oder komplementäres Führungsmittel (22, 23) aufweist, die voneinander gemäß der Längsachse (A) des Lufteingangs entfernt sind.

7. Gondel (1) nach einem der Ansprüche 1 bis 6, **dadurch gekennzeichnet, dass** die äußere Struktur einen Anschlag (28) umfasst, der ausgelegt ist, um mit einem komplementären Anschlag (23, 24) der inneren Struktur (19) in der Wartungsposition zusammenzuarbeiten, um die Bewegung der äußeren Struktur gegenüber der inneren Struktur zu begrenzen.

8. Gondel (1) nach Anspruch 7, **dadurch gekennzeichnet, dass** der Anschlag (28) mit einem Haken (29) ausgestattet ist, der ausgelegt ist, um mit einem Rückhalteorgan (23, 24), das auf der inneren Struktur (19) montiert ist, in der Wartungsposition der äußeren Struktur in Eingriff zu kommen, um das Kippen der äußeren Struktur zu verhindern.

## Claims

1. A nacelle (1) of a turbojet engine comprising:
- an outer structure including an annular lip (7) delimiting an air inlet as well as a cowl (9) extending within the extension of the annular lip (7)
- a fixed inner structure (18, 19, 20) extending within the extension of the air inlet and exhibiting an area (20) equipped with at least one equipment (21), the maintenance or monitoring of which is to be ensured,
the outer structure being movable with respect to the inner structure between an operating position in which the cowl (9) covers the area (20) provided with the equipment (21), and a maintenance position in which the cowl (9) uncovers said area (20) so as to allow access from the outside to the equipment (21),
**characterized in that** the outer structure is equipped with at least one reinforcing spar (10) designed to transmit forces between the annular lip (7) and the cowl (9), the spar (10) extending, along the radial plane of the air inlet, from the outer structure towards the inner structure,
the spar (10) exhibits a substantially omega-shaped section, forming a first and a second lateral walls (14, 15) fastened to the outer structure (9) and an end (16) facing the inner structure (18, 19),
the spar (10) includes guiding means (17) able to cooperate with complementary guiding means (22, 23) of the inner structure,
the guiding means (17) of the spar (10) are mounted on one of the first and second lateral walls (14, 15) of the spar (10), and **in that** the guiding means (17) of the spar (10) and the complementary guiding means (22, 23) of the inner structure are offset with respect to the radial plane (P) of extension of the spar (10).

2. The nacelle (1) according to claim 1, **characterized in that** the inner structure includes a shroud (18), a casing (19) intended to surround a fan of a turbojet engine and disposed downstream of the shroud (18), as well as an intermediate casing (20) mounted downstream of the casing (19), the intermediate casing (20) being provided with the equipment, for example an oil tank (21).

3. The nacelle (1) according to any of claims 1 or 2, **characterized in that** the guiding means and the complementary guiding means respectively include at least one rail (17) and at least one roller (22, 23).

4. The nacelle (1) according to claim 3, **characterized in that** the complementary guiding means include at least one roller (22, 23) in the general shape of a diabolo, defining a recessed contact surface (25, 26) and in the general shape of a V, the guiding means including at least one rail (17) inserted, at least partly, in the recess formed by the contact surface (25, 26).

5. The nacelle (1) according to any of claims 1 to 4, **characterized in that** at least one spar (10) exhibits a boxlike structure.

6. The nacelle (1) according to any of claims 1 to 5, **characterized in that** it includes at least a first and a second guiding means or complementary guiding means (22, 23), spaced apart from each other along the longitudinal axis (A) of the air inlet.

7. The nacelle (1) according to any of claims 1 to 6, **characterized in that** the outer structure includes a stop (28) intended to cooperate with a complementary stop (23, 24) of the inner structure (19) in the maintenance position, so as to limit the movement of the outer structure relative to the inner structure.

8. The nacelle (1) according to claim 7, **characterized in that** the stop (28) is equipped with a hook (29), intended to engage a retaining member (23, 24) mounted on the inner structure (19), in the maintenance position of the outer structure, in order to avoid tilting the outer structure.
